Europäisches Patentamt

European Patent Office

Office européen des brevets

(11) Veröffentlichungsnummer: **0 009 071**
**B1**

## (12) EUROPÄISCHE PATENTSCHRIFT

(45) Veröffentlichungstag der Patentschrift:
18.02.81

(21) Anmeldenummer: 79102057.1

(22) Anmeldetag: 21.06.79

(51) Int. Cl.³: **G 01 C 1/04,** G 01 S 3/78,
**G 02 B 23/10**

(54) **Theodolit zur Verfolgung und Vermessung eines Flugobjektes mit einer am Teleskop angeordneten Fernsehkamera.**

(30) Priorität: 20.09.78 CH 9809/78

(43) Veröffentlichungstag der Anmeldung:
02.04.80 Patentblatt 80/7

(45) Bekanntmachung des Hinweises auf die Patenterteilung:
18.02.81 Patentblatt 81/7

(84) Benannte Vertragsstaaten:
AT BE CH DE FR GB IT NL SE

(56) Entgegenhaltungen:
DE-A-1 802 120

(73) Patentinhaber: CONTRAVES AG,
Schaffhauserstrasse 580, CH-8052 Zürich (CH)

(72) Erfinder: van Mansvelt, C. Friso, Dipl.El.-Ing.,
Pfadhagstrasse 18, CH-8304 Wallisellen (CH)
Erfinder: Ritter, Hansruedi, Ing. HTL, Chilestieg 7,
CH-8153 Rümlang (CH)
Erfinder: Eicher, Walter, El.-Ing. HTL, Im Leisibühl 43,
CH-8044 Gockhausen (CH)

(74) Vertreter: Köver, François, Dr., Patentanwälte
H.Mitscherlich K. Gunschmann, Dr. W. Körber,
J.Schmidt-Evers Steinsdorfstrasse 10,
D-8000 München 22 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchgebühr entrichtet worden ist (Art. 99(1) Europäisches Patentübereinkommen).

# Theodolit zur Verfolgung und Vermessung eines Flugobjektes mit einer am Teleskop angeordneten Fernsehkamera

Die Erfindung betrifft einen Theodolit zur Verfolgung und Vermessung eines Flugobjektes gemäss dem Oberbegriff des Patentanspruches 1.

Im Patentdokument DE-A-1 802 120 wird ein Theodolit beschrieben, der mit einem Teleskop der erwähnten Art ausgestattet ist; das afokale Lichtstrahlenbündel wird mittels eines Spiegels wahlweise einer von mehreren Bildauswertevorrichtungen zugeführt. In einer bekannten Weiterentwicklung dieses Theodolits wurde der Spiegel durch einen teildurchlässigen Spiegel ersetzt, um das Lichtstrahlenbündel gleichzeitig mindestens einer Fernsehkamera und einer anderen Bildauswertevorrichtung, z.B. einer Film- oder Fotokamera, zuführen zu können. Aus dem zitierten Patentdokument ist noch bekannt, einen teildurchlässigen Spiegel zum Einblenden des Bildes eines Fadenkreuzes in das Lichtstrahlenbündel zu verwenden.

Die bekannte Ausführung des Theodolits hat jedoch Nachteile. Zum einen hat die bekannte Anordnung zur Folge, dass das Bild des Fadenkreuzes in alle Bildauswertevorrichtungen eingeblendet wird; dies stört zwar nicht, solange das Fernsehbild nur zur Beobachtung dient, bei Verwendung der Fernsehkamera zur Steuerung der Zielverfolgung (TV-tracking) muss jedoch das Bild des Fadenkreuzes unterdrückt werden. Zum anderen hat die bekannte Anordnung zur Folge, dass die Drehbewegung des Teleskoprohres um seine horizontale Drehachse das Bild der Fernsehkamera verdreht. Bei Verwendung der Fernsehkamera zur Steuerung der Zielverfolgung ist es daher nötig, entweder eine Koordinaten-Transformation oder eine die Bildverdrehung kompensierende Massnahme (Derotation) vorzusehen. Auch dadurch wird die Anlage komplizierter und teurer.

Schliesslich hat sich herausgestellt, dass ein teildurchlässiger Spiegel zwar ein einfaches optisches Element ist, dass aber seine Lichtdurchlass-Eigenschaften während seiner Rotation auf ziemlich komplizierte Weise variieren. Bei der bekannten Anordnung erfordert die laufende Fernseh-Zielverfolgung in Kombination mit der Möglichkeit der Umschaltung zwischen mehreren Kameras, dass die Fernsehkamera das vom teildurchlässigen Spiegel durchgelassene Lichtstrahlenbündel empfange. Es hat sich gezeigt, dass während der Umschaltung durch eine mechanisch gut realisierbare Bewegung des teildurchlässigen Spiegels Schwankungen der Lichtintensität auf der Fernsehkamera unvermeidlich sind. Dies kann aber die Zielverfolgung schwer beeinträchtigen: die Wahrscheinlichkeit ist gross, dass knapp vor einer interessanten Phase der Zielvermessung von einer (z.B. normalen) auf eine andere (z.B. Hochgeschwindigkeits-) Kamera umgeschaltet wird, was der automatischen Fernsehzielverfolgung einen Steuerungsstoss vergibt, der einen Verlust des Zieles zur Folge haben kann.

Es ist noch zu erwähnen, dass die Zuleitung des vom teildurchlässigen Spiegel durchgelassenen Lichtstrahlenbündels zur Fernsehkamera in bezug auf die Beschichtung der Spiegelfläche ungünstig ist. Erwünscht ist eine Teilung der Lichtstrahlen mit etwa 80% zur Kamera und 20% zur Fernsehkamera. Eine 80%ige Spiegelung erfordert eine metallische Beschichtung, die mit hohen Absorptionsverlusten behaftet ist.

Aufgabe der Erfindung ist, die erwähnten Nachteile zu beheben. Zu diesem Zweck ist die Erfindung gekennzeichnet durch die im Patentanspruch 1 angegebenen Merkmale. Eine vorteilhafte Weiterbildung der Erfindung ergibt sich aus dem Unteranspruch.

Mit der erfindungsgemässen Lösung werden die erwähnten Nachteile in ihrem Entstehen verhindert, statt mühsam und teuer kompensiert zu werden. Die Unterdrückung des Bildes des Fadenkreuzes im Fernsehbild ist nicht mehr erforderlich, da das Licht des Fadenkreuzes der Fernsehkamera gar nicht zugeleitet wird. Die Umschaltung zwischen verschiedenen Bildauswertevorrichtungen hat keinen Einfluss auf die Fernsehkamera und auf die von ihr gesteuerte Zielverfolgung, da das Lichtstrahlenbündel für die Fernsehkamera als erstes ausgeblendet wird. Das Fernsehbild wird durch die Drehung des Teleskops um seine horizontale Achse nicht verdreht, da das Teleskop und die Fernsehkamera sich gemeinsam drehen. Die Zuleitung des vom teildurchlässigen Spiegel ausgeblendeten Lichtstrahlenbündels zur Fernsehkamera ermöglicht die Verwendung von dielektrischen Schichten zur Beschichtung der Spiegelfläche, welche verlustarm sind und ohne Schwierigkeit die erwünschte Teildurchlässigkeit von 80% zu erreichen erlauben.

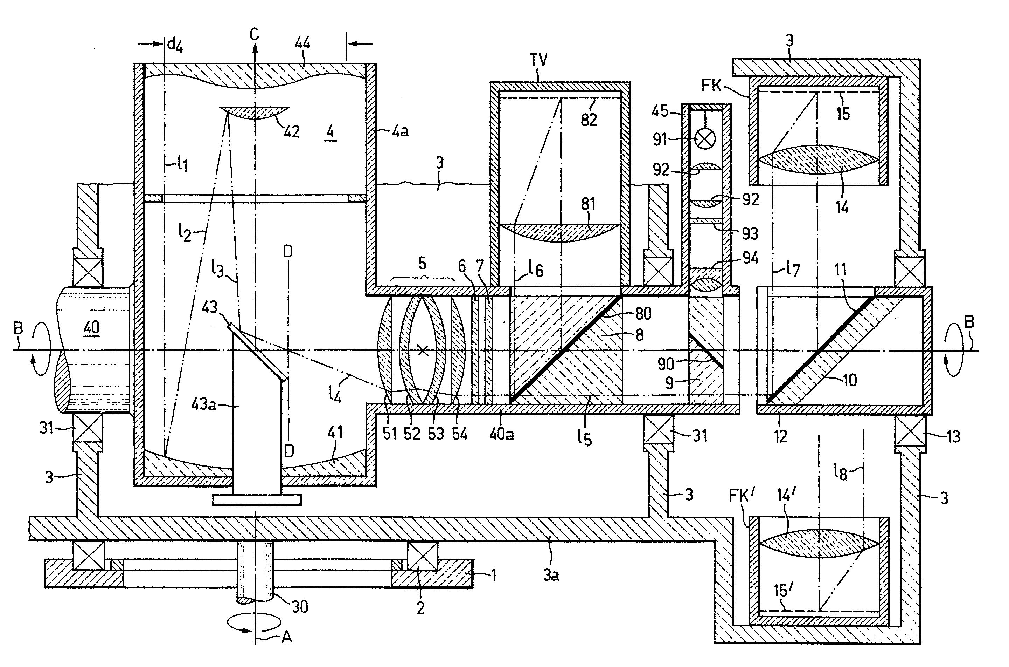

Im folgenden wird die Erfindung unter Bezugnahme auf die Zeichnung näher beschrieben. Die einzige Figur zeigt ein um eine vertikale Achse drehbares Theodolitgehäuse mit einem darin um eine horizontale Achse schwenkbaren Teleskop, sowie zugehörige Bildauswertevorrichtungen für das aus dem Teleskop austretende Lichtstrahlenbündel.

In der Zeichnung ist mit 1 ein mit einer nicht gezeichneten Sockelkonstruktion fest verbundener Lagerring bezeichnet, auf welchen mit Hilfe des Wälzlagers 2 eine Basisplatte 3a eines Theodolitgehäuses 3 um eine vertikale Achse A drehbar ist. Die Drehung der Basisplatte 3a erfolgt aufgrund der Drehung einer Welle 30, die von einem nicht eingezeichneten Motor angetrieben wird. In zwei Lagern 31 des Theodolitgehäuses 3 ist eine Welle 40 um eine horizontale Achse B drehbar gelagert. Diese Welle 40 trägt ein Teleskop 4 mit einem Teleskoprohr 4a, dessen optische Achse C quer zur Achse B liegt; die Welle 40 wird ebenfalls von einem nicht eingezeichneten Motor angetrieben.

Beim Betrieb des Theodolits mit Zielverfolgung eines Flugobjektes wird auf bekannte Weise die optische Achse C des Teleskops 4 durch entsprechende Steuerung der Motoren zum Antrieb der Wellen 30 und 40 stets auf ein laufend zu ortendes Flugobjekt, beispielsweise auf eine Rakete, gerichtet. Ebenfalls auf bekannte Weise werden die momentanen Drehstellungen der Theodolitplatte 3a und des Teleskoprohres 4a je in bezug auf eine Ausgangsstellung laufend ermittelt, um der Bestimmung der momentanen Azimut- und Elevationswinkel des zu ortenden Flugobjektes zu dienen.

Ein im Teleskoprohr 4a eingebautes Spiegelobjektiv ist dazu bestimmt und ausgebildet, das Gesichtsfeld des Teleskops 4 in eine quer zur horizontalen Achse B orientierte Primärbildfläche D-D abzubilden. Zu diesem Zweck umfasst diese Optik einen im Grund des Teleskoprohres 4a eingebauten, sphärisch geschliffenen konkaven Spiegel 41 und einen in der Nähe der Eintrittsöffnung eingebauten konvexen Spiegel 42, sowie einen an der Kreuzungsstelle der Achsen B und C um $\frac{\pi}{4}$ zu diesen Achsen geneigt eingebauten ebenen Spiegel 43, der auf einem Sockel 43a montiert ist; die in der Bildeintrittsöffnung des Teleskoprohres 4a eingebaute Glasplatte 44 sowie der konvexe Spiegel 42 sind so geschliffen, dass das in der Bildfläche D-D erzeugte reelle Bild des Gesichtsfeldes des Teleskops 4 sphärisch korrigiert ist; derartige Spiegelteleskop-Objektive sind unter der Bezeichnung «Schmidt-Cassegrain»-Objektive bekannt.

Das Bild in der Bildfläche D-D wird von einem Kollimator 5, das aus Linsen 51, 52, 53, 54 besteht und in einem hohlen Teil 40a der Welle 40 koaxial zur Achse B eingebaut ist, etwa in Richtung der Achse B afokal projiziert. Das Schmidt-Cassegrain-Spiegelobjektiv im Teleskop 4 und der Kollimator 5 bilden dann zusammen ein afokales optisches System, dessen Bildebene im Unendlichen liegt; die bildseitigen Strahlengänge sind parallel; ein am Rande der Eintrittsöffnung $d_4$ parallel zur Teleskopachse C eintretender Lichtstrahl verläuft, wie es $I_1, I_2, I_3, I_4, I_5, I_6, I_7, I_8$ zeigen. Daher wird es freigestellt, zwischen dem so geschaffenen optischen System und irgendwelchen Bildauswertevorrichtungen (z.B. Film-, Foto- oder Fernseh-Kameras) verschiedene Abstände zu wählen; es können auch ohne Schaden für die Abbildungsgenauigkeit planparallele Glieder in den bildseitigen Strahlengang $I_5$ eingesetzt werden, beispielsweise eine Farbfilterscheibe 6 und eine Graukeilscheibe 7.

Auf dem Strahlengang $I_5$ wird nach den Scheiben 6 und 7 ein Prisma 8 eingesetzt, das mit einer um $\frac{\pi}{4}$ zur Achse B geneigten teildurchlässigen Spiegelfläche 80 versehen ist. Dieses Prisma 8 mit der Spiegelfläche 80 ermöglicht das Ausblenden eines Teils der Strahlen quer zur Achse B, wie es der Strahlengang $I_6$ veranschaulicht. Die ausgeblendeten Strahlen fallen auf ein Objektiv 81 einer Fernsehkamera TV, in deren Bildebene 82 sie fokussiert werden.

Die Fernsehkamera TV dient auf bekannte Weise nicht nur der Fernseh-Darstellung des Teleskopbildes, sie kann auch zum Richten der Teleskopachse C auf das zu verfolgende Flugobjekt verwendet werden (TV-tracking), sofern diese Variante der Zielverfolgung erwünscht ist. Das Prisma 8 und die Fernsehkamera TV sind in einer relativ zum Teleskoprohr 4a unveränderlichen Lage angeordnet (in der Zeichnung sind die Achsen des Teleskoprohres 4a und der Fernsehkamera TV parallel, eine solche Anordnung ist aber nicht zwingend): sie folgen starr allen Bewegungen des Teleskoprohres 4a, so dass die Bewegungen des Teleskops das Fernsehbild nicht beeinflussen und insbesondere bei der Verwendung der Fernsehkamera zur Zielverfolgung keine Bildkorrektur (sogenannte Derotation) vorzunehmen ist. Im Prisma 8 wird etwa 20% der Lichtintensität in Richtung $I_6$ ausgeblendet, die restlichen 80% werden durchgelassen, was auf günstige und bekannte Weise mit verlustarmen dielektrischen Schichten auf der Spiegelfläche 80 erreichbar ist.

Nach der Durchquerung des Prismas 8 wird auf dem Strahlengang $I_5$ ein Prisma 9 eingesetzt, das mit einer um $\frac{\pi}{4}$ zur Achse B geneigten teildurchlässigen Spiegelfläche 90 versehen ist. Dieses Prisma 9 mit der Spiegelfläche 90 ermöglicht das Einblenden eines Fadenkreuzes in den Teil des Strahlenganges, der vom Prisma 8 geradlinig durchgelassen wird; das Fadenkreuz erscheint nicht im Fernsehbild. Zu diesem Zweck steht vom Teleskoprohr 40a ein Hilfsrohr 45 ab, in welchem hintereinander eine Glühbirne 91, ein Kondensor-Linsensystem 92, eine Blende 93 mit Kreuzspalt oder Fadenkreuz-Einsatz und ein Kollimationsobjektiv 94 zum Abbilden des beleuchteten Fadenkreuzes ins Unendliche eingesetzt sind. Anschliessend fällt das aus dem Prisma 9 austretende Lichtstrahlenbündel auf einen Spiegel 10 mit einer Spiegelfläche 11, welche um $\frac{\pi}{4}$ zur Achse B geneigt ist. Dieser Spiegel 10 ist in einem Gehäuse 12 angeordnet, das mit Hilfe eines Lagers 13 am Theodolitgehäuse 3 gelagert ist, derart, dass der Spiegel 10 um die Achse B drehbar ist, jedoch ganz unabhängig von der Drehung der Welle 40. In einer bestimmten Drehlage des Spiegels 10, z.B. in der in der Zeichnung dargestellten Lage, wird der Strahlengang $I_5$ so umgelenkt, wie es der Strahlengang $I_7$ veranschaulicht. Das am Spiegel 10 umgelenkte Lichtstrahlenbündel fällt dann auf ein Objektiv 14 einer Kamera FK, die am Theodolitgehäuse 3 befestigt ist und in deren Bildebene 15 das Lichtstrahlenbündel fokussiert wird. In einer anderen Drehlage des Spiegels 10, z.B. – wie in der Zeichnung angedeutet – nach einer Drehung des Spiegels 10 um π gegenüber der im vorangehenden beschriebenen Lage, werden die Strahlen so umgelenkt, wie es die Strahlengänge $I_5$ und $I_8$ veranschaulichen. Das am Spiegel 10 umgelenkte Lichtstrahlenbündel fällt dann auf ein Objektiv 14' einer anderen Kamera FK', die gegenüber dem Theodolitgehäuse 3 ebenfalls fest positioniert ist und in deren Bildebene 15' das Lichtstrahlenbündel fokussiert wird. Beispielsweise ist die Kamera FK eine normale Filmkamera, während die Kamera 15' eine besondere Filmkamera für Hochgeschwindigkeitsaufnahmen ist.

Dank der beschriebenen Anordnung des Prismas 9 und der zugeordneten Elemente vor dem Spiegel 10 mit den zugeordneten Kameras wird das Bild des Fadenkreuzes dem Bild des Teleskops 4 überlagert und mit diesem Bild fotografisch festgehalten; die Einstellung der Helligkeit des Fadenkreuzes kann optimal sein, da nur die Eigenschaften des Films und der Kamera zu berücksichtigen sind und insbesondere die Fernsehkamera das Bild des Fadenkreuzes nicht erhält. Beim Wechsel des Betriebes der einen Kamera zur anderen ändert sich die Lichtintensität in der Fernsehkamera nicht, da stets dieselben Elemente unverändert auf den Lichtweg einwirken. Im übrigen ist noch zu bemerken, dass in der Zeichnung zwei Fotokameras dargestellt wurden, jedoch – entsprechend dem verfügbaren Platz – drei oder mehr Bildauswertevorrichtungen am Theodolit vorgesehen werden können, und dass diese nicht nur Fotokameras, sondern auch Fernsehkameras z.B. zur Bandaufnahme (Video-Recorder) oder zur Infrarot-Beobachtung oder noch spezielle Vorrichtungen wie Helligkeitssensoren, Spektralanalysatoren und dergleichen sein können.

## Patentansprüche

1. Theodolit zur Verfolgung und Vermessung eines Flugobjektes mit einem aus einem Spiegelobjektiv und einem Kollimator (5) bestehenden Teleskop (4) mit einem Teleskoprohr (4a), das um eine horizontale Achse (B) relativ zu einem Theodolitgehäuse (3) drehbar gelagert ist, während das Theodolitgehäuse seinerseits um eine vertikale Achse (A) drehbar in einer Sockelkonstruktion (1) gelagert ist, wobei der Kollimator (5) ein vom Spiegelobjektiv erzeugtes reelles Bild ins Unendliche projiziert und somit ein afokales Lichtstrahlenbündel liefert, das mittels einer ersten, teildurchlässigen Spiegelfläche (80) einer Fernsehkamera (TV) und mindestens einer anderen Bildauswertevorrichtung (FK) zuführbar ist, dadurch gekennzeichnet, dass die erste Spiegelfläche (80) und die Fernsehkamera (TV) am Teleskop (4) in einer relativ zum Teleskoprohr (4a) unveränderlichen Lage angeordnet ist.

2. Theodolit nach Anspruch 1 mit Mitteln zum Erzeugen eines Bildes eines Fadenkreuzes und mit einer zweiten Spiegelfläche (90) zum Einblenden des Bildes des Fadenkreuzes in das Lichtstrahlenbündel, dadurch gekennzeichnet, dass die erste Spiegelfläche (80) zwischen dem Kollimator (5) und der zweiten Spiegelfläche (90) angeordnet ist.

## Patent Claims

1. Theodolite for tracking and measuring a flying object, having a telescope (4) comprising a mirror objective and a collimator (5) and with a telescope tube (4a) which is mounted rotatably about a horizontal axis (B) relative to a theodolite housing (3), while the theodolite housing itself is mounted rotatably about a vertical axis (A) in a base construction (1), the collimator (5) projecting to infinity a real image produced by the mirror objective and thus supplying an afocal beam of light rays which may be transmitted by means of a first semi-reflecting mirror surface (80) of a television camera (TV) and at least one other image evaluating device (FK), characterised in that the first mirror surface (80) and the television camera (TV) are arranged on the telescope (4) in a position which is invariable in respect of the telescope tube (4a).

2. Theodolite according to Claim 1 having means for producing an image of a graticule and having a second mirror surface (90) for the fading of the image of the graticule into the beam of light rays, characterised in that the first mirror surface (80) is arranged between the collimator (5) and the second mirror surface (90).

## Revendications

1. Théodolite pour la poursuite et la télémesure d'un objectif volant à l'aide d'un télescope (4) composé d'un objectif à miroir et d'un collimateur (5), le télescope comportant un tube (4a) monté à rotation autour d'un axe horizontal (B) par rapport au boîtier (3) du théodolite, ce boîtier étant lui-même monté à rotation autour d'un axe vertical (A) par rapport au socle (1), le collimateur (5) projetant à l'infini l'image réelle fournie par l'objectif à miroir, en donnant ainsi un faisceau de rayons lumineux afocal, ce faisceau étant envoyé par l'intermédiaire d'une première surface à miroir (80), partiellement transparente, à une caméra de télévision (TV) et à au moins un autre dispositif d'exploitation d'image (FK), théodolite caractérisé en ce que la première surface image (80) et la caméra de télévision (TV) sont montées en position fixe par rapport au tube (4a) du télescope, sur le télescope (4).

2. Théodolite selon la revendication 1, comportant des moyens pour former une image d'un réticule et une seconde surface à miroir (90) pour superposer l'image du réticule au faisceau de rayons lumineux, théodolite caractérisé en ce que la première surface image (80) est prévue entre le collimateur (5) et la seconde surface image (90).